# EUROPEAN PATENT SPECIFICATION

(11) **EP 3 509 887 B1**
(45) Date of publication and mention of the grant of the patent: **03.08.2022**
(21) Application number: 17849195.7
(22) Date of filing: 11.08.2017
(51) Int. Cl.: B60K 15/035, B62D 33/067, F17C 13/00, F17C 13/12

(54) **AN ARRANGEMENT FOR MOUNTING A GAS PIPE IN A VEHICLE**
ANORDNUNG ZUR BEFESTIGUNG EINES GASROHRES IN EINEM FAHRZEUG
AGENCEMENT POUR MONTER UN TUYAU D'ÉCHAPPEMENT DES GAZ DANS UN VÉHICULE

(30) Priority: 09.09.2016 SE 1651208
(43) Date of publication of application: 17.07.2019
(73) Proprietor: Scania CV AB, 151 87 Södertälje (SE)
(72) Inventor: LINDEBERG, Jonas, SE-85239 Sundsvall (SE)
(74) Representative: Scania CV AB
(86) International application number: PCT/SE2017/050810
(87) International publication number: WO 2018/048335

(56) References cited:
- WO-A1-01/84035
- WO-A1-01/84035
- WO-A1-2014/098712
- WO-A1-2014/098712
- DE-A1-102009 057 563
- US-A- 3 151 695
- US-A- 3 151 695
- US-A- 4 378 945
- US-A- 4 378 945

## Description

### TECHNICAL FIELD

The invention relates to a vehicle comprising an arrangement for mounting a gas pipe according to the preamble of claim 1.

### BACKGROUND ART

Alternative fuels such as natural gas and biogas are being introduced in vehicles such as heavy vehicles. For this purpose fuel systems for compressed natural gas, CNG and compressed biogas CBG and fuel systems for liquefied natural gas LNG and liquefied biogas LBG are being developed.

Systems for liquefied gas, i.e. LNG and LBG, require handling of relatively low temperatures, e.g. -130 degree Celsius at 10 bar for LNG, requiring certain conduits for transporting the liquefied natural gas and a certain tank for housing the fuel. When the vehicle is standing still and the engine is not operating the pressure in the tank will increase due to temperature increase in the tank. Therefore the system for liquefied gas is provided with a relief valve which according to an embodiment is set to open at 16 bar for evacuating evaporated gas.

The fuel tank/tanks for liquefied gas systems are usually arranged along and in connection to the vehicle frame. The evaporated gas is configured to be evacuated via a so called boil-off pipe connected to the fuel tank. The gas needs to be evacuated at a certain height. The boil-off pipe is further not allowed to project laterally or upwardly from the vehicle. For trucks the boil-off pipe is therefore usually arranged behind the cab of the truck. For trucks having a tiltable cabs, i.e. cabs arranged to be tilted forwardly, the boil-off pipe is according to a variant arranged to be connected to a vertical member arranged in connection to and at a distance from the rear side of the cab to avoid influence from the tilting.

Such a solution, however, takes up space behind the cab which otherwise could be used for overhang or semi-trailer in order to optimize the length of the load carrying part of the vehicle.

US3151695 discloses an arrangement for mounting an air intake pipe to a vehicle, said vehicle having a tiltable cab. The pipe is attached to the rear side of the cab. Said arrangement comprises a coupling configuration for providing a chassis based connection with the air intake pipe in a non-tilted position of the cab and disconnecting the pipe from the chassis based connection in a tilted position of the cab. The coupling configuration comprises a bellows configuration connected to said pipe, and a coupling element with an air filter for receiving said bellows configuration in said non-tilted position.

Applying such a solution for a boil-off pipe of a liquefied gas fuel system, i.e. attaching the boil-off pipe to the rear side of the cab and using a coupling configuration with a bellows configuration, would facilitate taking up less space behind the cab.

There is however a need to improve mounting a gas pipe to a vehicle where the gas pipe is a boil-off pipe of a liquefied gas fuel system.

### OBJECTS OF THE INVENTION

An object of the present invention is to provide a vehicle comprising an arrangement for mounting a gas pipe where the gas pipe is a boil-off pipe of a liquefied gas fuel system which facilitates utilization in both tilted and non-tilted position of the cab.

### SUMMARY OF THE INVENTION

These and other objects, apparent from the following description, are achieved by a vehicle as set out in the appended independent claim 1. Preferred embodiments of the vehicle are defined in appended dependent claims.

Specifically an object of the invention is achieved by a vehicle comprising an arrangement for mounting a gas pipe in said vehicle, said vehicle having a tiltable cab. Said pipe is attached to the rear side of the cab. Said arrangement comprises a coupling configuration for providing a chassis based connection with the pipe in a non-tilted position of the cab and disconnecting the pipe from the chassis based connection in a tilted position of the cab. Said coupling device comprises a bellows connected to said pipe, and a coupling element for receiving said bellows in said non-tilted position. According to the arrangement said pipe is a boil-off pipe of a liquefied gas fuel system for said vehicle, said fuel system having a chassis-mounted liquefied gas fuel tank for providing fuel to an engine of the vehicle, wherein evaporated gas is arranged to be evacuated from said tank via said boil-off pipe at a certain tank pressure. Said chassis based connection is arranged to provide a connection between said tank and said boil-off pipe. Said coupling element comprises a pipe opening through which pipe said evaporated gas from said tank is arranged to be evacuated and for providing a connection for an external evacuation of said evaporated gas in said tilted position.

By thus providing a pipe with a pipe opening in said coupling element easy and efficient connection for external evacuation of evaporated gas in a tilted position of the cab is facilitated. This thus facilitates evacuation of evaporated gas in a workshop where it is likely that evacuation will be required and where the cab is usually tilted. In the non-tilted position of the cab the coupling device with the bellows will absorb movements of the cab relative to the vehicle chassis/tank. The bellows thus has a length and flexibility to overcome certain movements of the cab relative to the chassis during drive of the vehicle with the cab in the non-tilted, i.e. upright position, in which the bellows is coupled to the coupling element. The bellows may thus be extended and compressed and has a certain lateral flexibility. With this coupling configuration in which the boil-off pipe is disconnected from the tank there is no connecting means between the boil-off pipe and the tank in the tilted position of the cab which facilitates working on the vehicle in a workshop when the cab is tilted.

According to an embodiment of the vehicle said coupling element comprises a conically shaped guide member arranged around said pipe opening. Hereby easy and efficient guiding of the coupling element in order to connect the bellows configuration and the coupling element when the vehicle cab is moved from a tilted position to a non-tilted position is facilitated.

According to an embodiment of the vehicle said bellows comprises a conically shaped concave guide seat for facilitating connection of said bellows configuration to said coupling element. Hereby guiding of the coupling element in order to connect the coupling element to the bellows when the vehicle cab is moved from a tilted position to a non-tilted position is further facilitated.

According to an embodiment the vehicle further comprises a cover element removably arranged in connection to said opening for covering said pipe opening. Hereby the pipe opening is efficiently protected at the same time as the possibility to remove the cover element in order to provide connection for an external evacuation of said evaporated gas in said tilted position is facilitated.

According to an embodiment of the vehicle said bellows is arranged to accommodate mutual movements between said chassis and said cab in said non-tilted position of the cab. In the non-tilted position the bellows will thus absorb movements of the cab relative to the vehicle chassis/tank which will thus improve safety of the arrangement for mounting said boil-off pipe to the rear side of the cab in that the coupling device in the connected state with the cab in the non-tilted position will be kept in the coupled state and the risk of damage is minimized. The bellows thus has a length and flexibility to overcome certain movements of the cab relative to the chassis during drive of the vehicle with the cab in the non-tilted, i.e. upright position, in which the bellows is coupled to the coupling element. The bellows may thus be extended and compressed and has a certain lateral flexibility.

Specifically an object of the invention is achieved by a vehicle, wherein said coupling device is arranged to operatively connect the gas fuel tank with the cab-mounted boil-off pipe when the cab is in a non-tilted position.

### BRIEF DESCRIPTION OF THE DRAWINGS

For a better understanding of the present invention reference is made to the following detailed description when read in conjunction with the accompanying drawings, wherein like reference characters refer to like parts throughout the several views, and in which:
Fig. 1a schematically illustrates a side view of a vehicle with a tiltable cab in a non-tilted position, the vehicle having an arrangement for mounting a gas pipe to the cab of the vehicle according to an embodiment of the present invention;
Fig. 1b schematically illustrates a side view of the vehicle in fig. 1a with the cab in a tilted position;
Fig. 2 schematically illustrates a cut perspective view of the coupling device of the arrangement in fig. 1a;
Fig. 3 schematically illustrates a cut perspective view of a bellows of the coupling device in fig. 2;
Fig. 4 schematically illustrates a perspective view of a coupling element of the coupling device in fig. 2;
Fig. 5a schematically illustrates a cut perspective view of the coupling element in fig. 4; and
Fig. 5b schematically illustrates a perspective view of the coupling element in fig. 4.

### DETAILED DESCRIPTION

Hereinafter the term "liquefied gas" refers to liquefied natural gas, LNG, or liquefied biogas, LBG.

Hereinafter the term "liquefied gas fuel system" refers to a fuel system for liquefied natural gas, LNG, or a fuel system for liquefied biogas, LBG. Hereinafter the term "flexible hose" refers to hoses configured to transport fluid for a liquefied gas fuel system, said hose being bendable to a certain degree and having a certain flexibility so as to facilitate taking up relative movements of a vehicle cab relative to a liquefied gas fuel tank.

Hereinafter the term "boil-off pipe" refers to a pipe, preferably a rigid pipe, configured to evacuate evaporated gas from a liquefied gas fuel tank of a liquefied gas fuel system. The pipe is according to an embodiment made of stainless steel. The boil-off pipe could alternatively be flexible such as a flexible hose.

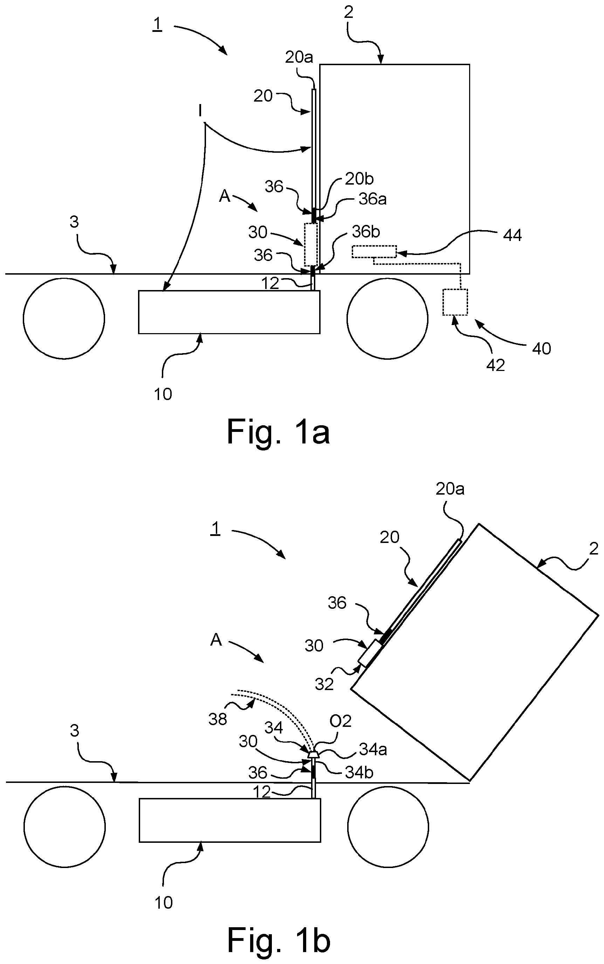

Fig. 1a schematically illustrates a side view of a vehicle 1 with a tiltable cab 2 in a non-tilted position, the vehicle having an arrangement A for mounting a gas pipe 20 to the cab 2 of the vehicle according to an embodiment of the present invention; and fig. 1b schematically illustrates a side view of the vehicle 1 in fig. 1a with the cab 2 in a tilted position.

The vehicle 1 has a vehicle chassis 3. The cab 2 is tiltable relative to the vehicle chassis 3. The exemplified vehicle 1 is a heavy vehicle in the shape of a truck. The vehicle 1 is fuelled by means of a liquefied gas fuel system for operating the engine of the vehicle. The vehicle 1 may be any suitable truck configured to be arranged with a load carrying part behind the cab 2. Such a vehicle may be a truck arranged to carry an overhang behind the cab 2 or a semi-trailer truck comprising a towing truck and a semi-trailer coupled to the towing truck behind the cab 2 via a fifth wheel.

The cab 2 is tiltable between a non-tilted position, illustrated in fig. 1a, in which the cab is upright and the vehicle may be driven and a tilted position, illustrated in fig. 1b. In the non-tilted position, the cab 2 is locked by means of cab locking members, not shown. The cab 2 may be tilted in any suitable way by any tiltable means. The cab 2 is according to an embodiment tiltable by means of a cab tilting operation arrangement 40 shown in fig. 1a. The cab tilting operation arrangement 40 comprises a pump unit 42 and at least one hydraulic piston unit 44 for tilting the cab 2, hydraulically connected to the pump unit 42 via a hydraulic line.

The vehicle thus comprises a liquefied gas fuel system I. Said liquefied gas fuel system I comprises a chassis-mounted liquefied gas fuel tank 10 for providing fuel to the engine of the vehicle 1. Said liquefied gas fuel system I comprises a boil-off pipe 20 through which evaporated gas from the tank 10 is configured to be evacuated at a certain tank pressure. The gas pipe 20 is thus constituted by a boil-off pipe 20 of the liquefied gas fuel system I. The boil-off pipe 20 is configured to be connected to the fuel tank 10. The system for liquefied gas is provided with a relief valve, not shown, which is set to open at said certain pressure, said pressure according to an embodiment being 16 bar, for evacuating evaporated gas from the tank 10 via the boil-off pipe 20. Said pressure may depend on the size of the tank.

The vehicle 1 illustrated in fig. 1 is a simplified illustration. The vehicle chassis of the vehicle 1 normally comprises a vehicle frame comprising a left longitudinal vehicle beam and a right longitudinal vehicle beam, not shown. The liquefied gas fuel tank 10 is arranged in connection to the vehicle frame. The liquefied gas fuel tank 10 may according to an embodiment comprise a left liquefied gas fuel tank part arranged in connection to a left longitudinal vehicle beam and a right liquefied gas fuel tank part arranged in connection to the right longitudinal beam of the chassis of the vehicle 1.

The vehicle comprises an arrangement A for mounting the boil-off pipe 20 of said liquefied gas fuel system I to the vehicle. The arrangement A1 for mounting the boil-off pipe 20 to the vehicle 1 comprises a coupling device 30.

The boil-off pipe 20 is configured to be connected to the fuel tank 10 via said coupling device 30. The coupling device 30 is according to an embodiment connected to a pipe 12 of the tank 10. Said relief valve is according to an embodiment arranged in connection to said pipe 12.

The boil-off pipe 20 is attached to the rear side of the cab 2. The boil-off pipe 20 is arranged to be fixedly attached to the rear side of the cab 2 by means of any suitable attachment means, e.g. any suitable joints such as one or more screw joints. The boil-off pipe 20 is thus arranged to be tilted together with the cab 2 when the cab 2 is tilted to the tilted position.

The boil-off pipe 20 has an upper side 20a with an opening through which said evaporated gas is arranged to be evacuated and an opposing lower side 20b configured to be connected to the tank 10 via said coupling device 30 in the non-tilted position of the cab 2.

The coupling device 30 is arranged to provide a chassis based connection with the boil-off pipe 20 in the non-tilted position of the cab 2 and disconnecting the pipe 20 from the chassis based connection in a tilted position of the cab 2. The coupling device 30 is arranged for connecting the tank 10 with the boil-off pipe 20 in a non-tilted position of the cab and disconnecting the tank 10 from the boil-off pipe 20 when the cab 2 is tilted to the tilted position.

The coupling device 30 for connecting the tank 10 with the boil-off pipe 20 comprises a bellows 32 connected to the boil-off pipe and a coupling element 34 connected to the tank 10. In the non-tilted positon of the cab 2 the bellows 32 and the coupling element 34 are coupled to each other and in the tilted position of the cab 2 the bellows 32 and the coupling element 34 are de-coupled from each other.

Said boil-off pipe 20 is connected to the tank 10 via flexible hose 36. The flexible hose 36 is connected to the tank 10 via said pipe 12. The flexible hose 36 is arranged to be connected to the boil-off pipe 20 via said coupling device 30 in said non-tilted position of the cab 2. The flexible hose 36 comprises a first hose part 36a connected to the tank 10 via said pipe 12 and a second hose part 36b connected to said boil-off pipe 20.

The bellows 32 is connected to the boil-off pipe 20 via said first hose part 36a. The coupling element 34 is connected to the tank 10 via said second hose part 36b.

The bellows 32 is configured to absorb movements of the cab 2 relative to the vehicle chassis 3 in the non-tilted position of the cab 2. The bellows 32 thus has a length and flexibility to overcome certain movements of the cab 2 relative to the chassis 3 during drive of the vehicle with the cab 2 in the non-tilted, i.e. upright position.

As shown schematically in fig. 1b said coupling element 34 comprises a pipe opening O2 of a pipe 34b through which pipe 34b said evaporated gas from said tank 10 is arranged to be evacuated and for providing a connection for e.g. a flexible hose 38, illustrated with dotted lines, for an external evacuation of said evaporated gas in said tilted position of the cab 2.

Said coupling element 34 comprises a conically shaped guide member 34a arranged around said pipe opening O2 as schematically illustrated in fig. 1b.

Said bellows 32 comprises a here not shown conically shaped concave guide seat for facilitating connection of said bellows 32 to said coupling element 34.

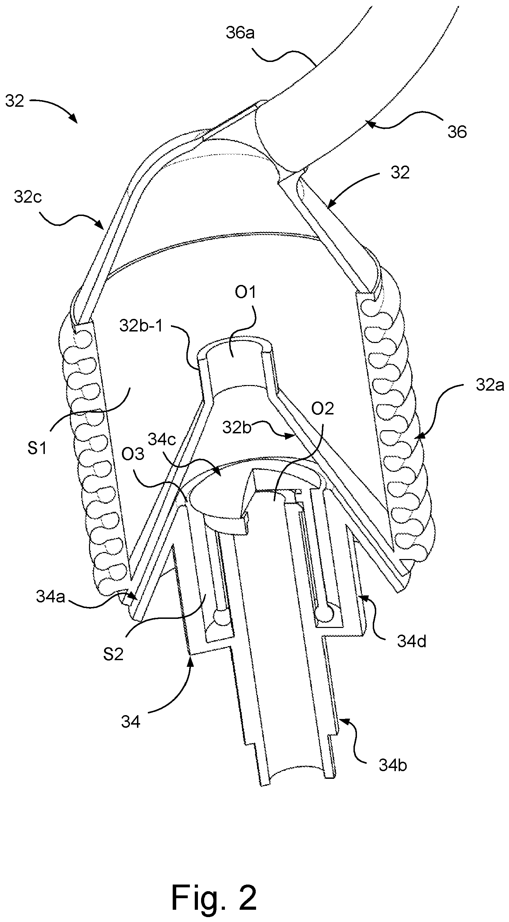

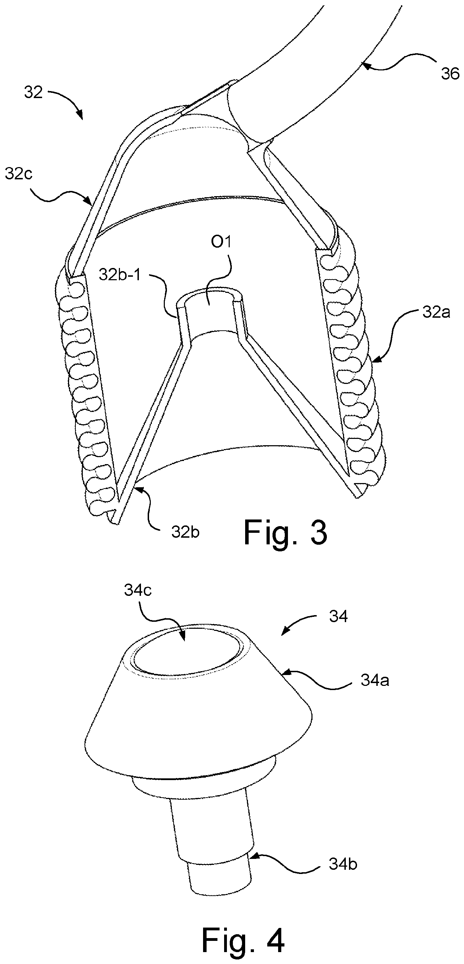

Said coupling configuration 30 is described in more detail below with reference to fig. 2. Said bellows 32 is described in more detail below with reference to fig. 2 and 3. Said coupling element 34 is described in more detail below with reference to fig. 2, 4, 5a and 5b.

The vehicle in fig. 1a-b comprises a connection arrangement assembly 10, 20, 30 comprising said chassis-mounted liquefied gas fuel tank 10, said cab-mounted boil-off pipe 20 and said connection arrangement 30, wherein said coupling device 30 is arranged to operatively connect the gas fuel tank 10 with the cab-mounted boil-off pipe 20 when the cab 2 is in a non-tilted position. Thus, said chassis-mounted liquefied gas fuel tank 10, said cab-mounted boil-off pipe 20 and said coupling device 30 provides a connection arrangement assembly 10, 20, 30, wherein said coupling device 30 is arranged to operatively connect the gas fuel tank 10 with the cab-mounted boil-off pipe 20 when the cab 2 is in a non-tilted position.

Fig. 2 schematically illustrates a cut perspective view of coupling device 30 of the arrangement in fig. 1a. The coupling device 30 is in the coupled state in which the vehicle cab is in the non-tilted state. The coupling device 30 is arranged to connect the tank with the boil-off pipe in the non-tilted position of the vehicle cab.

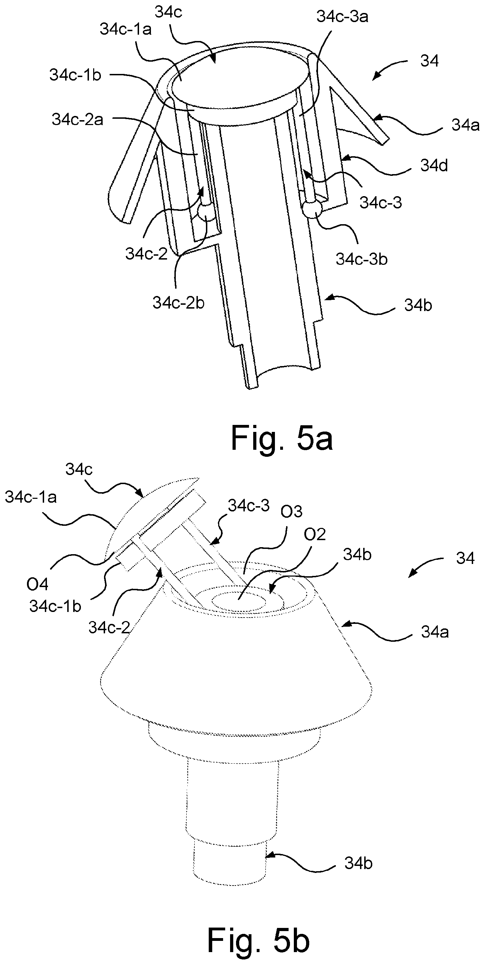

The coupling device 30 comprises said bellows 32 and said coupling element 34. The bellows 32 is configured to be connected to the boil-off pipe via said flexible hose 36, i.e. the first hose part 36a of the flexible hose 36. A cut perspective view of the bellows of the coupling device 30 is also schematically illustrated in fig. 3. Perspective views of the coupling element 34 of the coupling device are also shown in fig. 4 and 5b and a cut perspective view of the coupling element 34 is illustrated in fig. 5a.

The bellows 32 comprises an essentially cylindrically shaped bellows portion 32a configured to provide a bellows function. The bellows 32 has an internal space S1 for allowing evacuation of evaporated gas from the tank.

The bellows portion 32a of the bellows 32 is configured to absorb movements of the cab relative to the vehicle chassis/tank in the non-tilted position of the cab. The bellows portion 32a of the bellows 32 thus has a length and flexibility to overcome certain movements of the cab relative to the chassis during drive of the vehicle with the cab in the non-tilted, i.e. upright position, in which the bellows 32 is coupled to the coupling element 34. The bellows portion 32a of the bellows 32 may thus be extended and compressed and has a certain lateral flexibility.

The bellows 32 comprises a conically shaped concave guide seat 32b for facilitating connection of said bellows configuration 32 to said coupling element 34. The conically shaped concave guide seat 32b is thus tapering inwardly from the lower end of the bellows 32. The conically shaped concave guide seat 32b has a pipe shaped end portion 32b1 providing an opening O1 directed upwardly within the internal space S1 of the bellows .

The conically shaped concave guide seat 32b thus has a funnel-shape arranged upside down within the bellows 32.

The bellows 32 comprises an upper connection portion 32c arranged at the upper side of the bellows 32 for connection to the boil-off pipe via said hose part 36a of the flexible hose 36.

Said coupling element 34 comprises a conically shaped guide member 34a arranged in the upper portion of the coupling element 34. Said conically shaped guide member 34a of the coupling element has a shape for facilitating connection said bellows 32 to said coupling element 34 by providing guiding into the conically shaped concave guide seat 32b of the bellows when the cab of the vehicle is moved from a tilted position to a non-tilted position. Thus, hereby coupling of the boil-off pipe-connected bellows 32 with the tank-connected coupling element 34 is facilitated.

The conically shaped guide member 34a arranged in the upper portion of the coupling element 34 provides an opening O3 in the upper portion of the conically shaped guide member 34a.

The conically shaped concave guide seat 32b of the bellows 32 is arranged to co-act with the conically shaped guide member 34a of the coupling element 34 in the non-tilted of the cab such that coupling of the bellows 32 and the coupling element 34 and thus connection between the tank and the boil-off pipe is efficiently maintained.

In the coupled state of the coupling device 30, i.e. in the non-tilted state of the cab, the conically shaped concave guide seat 32b of the bellows 32 and the conically shaped guide member 34a of the coupling element 34 are configured to be aligned, here essentially coaxially aligned.

Said coupling element 34 comprises a pipe 34b with an upper portion having a pipe opening O2 and a lower portion for connection to the flexible hose, i.e. the second part of the flexible hose, for connection to the tank.

Evaporated gas from said tank 10 is arranged to be evacuated through said pipe opening O2 of said pipe 34b. The upper portion of the pipe 34b with said opening O2 is arranged to provide a connection a connection for e.g. a flexible hose for an external evacuation of said evaporated gas in said tilted position of the cab 2. Such external evacuation is e.g. necessary when the vehicle is in a workshop.

Said conically shaped guide member 34a of the coupling element 34 is arranged around said pipe opening O2.

Said coupling element 34 comprises a cover element 34c removably arranged in connection to said pipe opening O2 for covering said pipe opening O2.

Said coupling element 34 comprises an upper surrounding portion 34d configured to surround an upper portion of the pipe 34b and configured to support the conically shaped guide member 34a in the upper portion. The surrounding portion 34d has an essentially cylindrical configuration. A space S2 is provided between the surrounding portion 34d is and the upper portion of the pipe 34b. The bottom portion of the surrounding portion 34d is connected to the pipe 34b providing an inner bottom of said space S2. The upper portion of the surrounding portion 34d provides said opening O3.

The cover element 34c is configured to be retainably removably arranged in connection to the pipe opening O2.

As can be seen in fig. 5a-b, the cover element 34c comprises a cap member 34c-1 with an upper cover part 34c-1a configured to extend outside the pipe and partly over the opening O3 and to provide said cover and an underlying ring-shaped distance part 34c-1b arranged underneath the cover part 34c-1a to provide a distance between the top of the pipe 34b so as to facilitate evacuation of gas through the pipe opening O2. There is a space between the cover and the ring-shaped distance part providing an opening O4 for facilitating evacuation of gas via the opening O3.

As can be seen in fig. 5a-b, the cover element 34c comprises a pair of retaining legs 34c-2, 34c-3. The respective retaining leg 34c-2, 34c-3 comprises a leg portion 34c-2a, 34c-3a connected at the upper portion to the cap member 34c-1. The respective retaining leg 34c-2, 34c-3 comprises a foot portion 34c-2b, 34c-3b having a greater lateral extension than the leg portions so as to provide a retaining function for retaining the cover element 34c at the coupling element 34 when the cover element 34c is removed from the opening O2 of the pipe 34b for facilitating external evacuation by attaching an external flexible hose to the pipe 34b.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A vehicle (1) comprising a chassis (3), a tiltable cab (2), a pipe being attached to the rear side of the cab (2), and a coupling device (30) configured for providing a chassis based connection with the pipe (20) in a non-tilted position of the cab (2) and configured for disconnecting the pipe (20) from the chassis based connection in a tilted position of the cab (2), said coupling device (30) comprising a bellows (32) connected to said pipe (20) and a coupling element (34) for receiving said bellows (32) in said non-tilted position, **characterized in that** the vehicle comprises a liquefied gas fuel system (I) and **in that** said pipe is a boil-off pipe (20) of a liquefied gas fuel system (I) for said vehicle (1), said fuel system having a chassis-mounted liquefied gas fuel tank (10) for providing fuel to an engine of the vehicle (1), wherein evaporated gas is arranged to be evacuated from said tank (10) via said boil-off pipe (20) at a certain tank pressure, wherein said chassis based connection is arranged to provide a connection between said tank (10) and said boil-off pipe (20), and wherein the evaporated gas from said tank is evacuated through said coupling element (34) comprising a pipe opening (O2) for providing a connection for an external evacuation of said evaporated gas in said tilted position.

2. A vehicle (1) according to claim 1, wherein said coupling element (34) comprises a conically shaped guide member (34a) arranged around said pipe opening (O2).

3. A vehicle (1) according to claim 2, wherein said bellows (34) comprises a conically shaped concave guide seat (32a) for facilitating connection of said bellows (32) to said coupling element (34).

4. A vehicle (1) according to claim 1 or 2, further comprising a cover element (34c) removably arranged in connection to said opening for covering said pipe opening (O2).

5. A vehicle (1) according to any one of the claims 1-4, wherein said bellows (32) is arranged to accommodate mutual movements between said chassis (3) and said cab (2) in said non-tilted position of the cab (2).

6. A vehicle (1) according to any one of the claims 1-5, wherein said coupling device (30) is arranged to operatively connect the gas fuel tank (10) with the cab-mounted boil-off pipe (20) when the cab (2) is in a non-tilted position.

## Patentansprüche

1. Fahrzeug (1) mit einem Fahrgestell (3), einem kippbaren Fahrerhaus (2), einem an der Rückseite des Fahrerhauses (2) angebrachten Rohr und einer Kupplungsvorrichtung (30), die dazu eingerichtet ist, eine fahrgestellbasierte Verbindung mit dem Rohr (20) in einer nicht gekippten Position des Fahrerhauses (2) bereitzustellen und das Rohr (20) von der fahrgestellbasierten Verbindung in einer gekippten Position des Fahrerhauses (2) zu trennen, wobei die Kupplungsvorrichtung (30) einen mit dem Rohr (20) verbundenen Balg (32) und ein Kupplungselement (34) zur Aufnahme des Balgs (32) in der nicht gekippten Position umfasst, **dadurch gekennzeichnet, dass** das Fahrzeug ein Flüssiggas-Kraftstoffsystem (I) umfasst und dass das Rohr ein Verdampfungsrohr (20) eines Flüssiggas-Kraftstoffsystems (I) für das Fahrzeug (1) ist, wobei das Kraftstoffsystem einen an dem Fahrgestell angebrachten Flüssiggastank (10) umfasst, um einen Motor des Fahrzeugs (1) mit Kraftstoff zu versorgen, wobei verdampftes Gas bei einem bestimmten Tankdruck über das Verdampfungsrohr (20) aus dem Tank (10) abgeleitet wird, wobei die fahrgestellbasierte Verbindung eine Verbindung zwischen dem Tank (10) und dem Verdampfungsrohr (20) bereitstellt und wobei das verdampfte Gas aus dem Tank durch das Kupplungselement (34) abgeleitet wird, das eine Rohröffnung (O2) umfasst, damit eine Verbindung für eine externe Ableitung des verdampften Gases in der gekippten Position bereitgestellt ist.

2. Fahrzeug (1) nach Anspruch 1, wobei das Kupplungselement (34) ein konisch geformtes Führungselement (34a) umfasst, das um die Rohröffnung (O2) herum angeordnet ist.

3. Fahrzeug (1) nach Anspruch 2, wobei der Balg (34) einen konisch geformten konkaven Führungssitz (32a) umfasst, der eine Verbindung des Balgs (32) mit dem Kupplungselement (34) vereinfacht.

4. Fahrzeug (1) nach Anspruch 1 oder 2, das ferner ein Abdeckelement (34c) umfasst, das abnehmbar in Verbindung mit der Öffnung angeordnet ist, um die Rohröffnung (O2) abzudecken.

5. Fahrzeug (1) nach einem der Ansprüche 1 bis 4, wobei der Balg (32) dazu eingerichtet ist, gegenseitige Bewegungen zwischen dem Fahrgestell (3) und dem Fahrerhaus (2) in der nicht gekippten Position des Fahrerhauses (2) aufzunehmen.

6. Fahrzeug (1) nach einem der Ansprüche 1 bis 5, wobei die Kupplungsvorrichtung (30) dazu eingerichtet ist, den Flüssiggastank (10) mit dem an dem Fahrerhaus angebrachten Verdampfungsrohr (20) funktionsfähig zu verbinden, wenn das Fahrerhaus (2) nicht gekippt ist.

## Revendications

1. Véhicule (1) comprenant un châssis (3), une cabine inclinable (2), un tuyau fixé au côté arrière de la cabine (2) et un dispositif de couplage (30) configuré pour fournir un raccord basé sur châssis avec le tuyau (20) dans une position non inclinée de la cabine (2) et configuré pour défaire le raccordement du tuyau (20) du raccord basé sur châssis dans une position inclinée de la cabine (2), ledit dispositif de couplage (30) comprenant un soufflet (32) raccordé audit tuyau (20) et un élément de couplage (34) destiné à recevoir ledit soufflet (32) dans ladite position non inclinée, **caractérisé en ce que** le véhicule comprend un système de carburant à gaz liquéfié (I) et **en ce que** ledit tuyau est un tuyau d'évaporation (20) d'un système de carburant à gaz liquéfié (I) pour ledit véhicule (1), ledit système de carburant ayant un réservoir de carburant de gaz liquéfié monté sur châssis (10) pour fournir du carburant à un moteur du véhicule (1), dans lequel le gaz évaporé est agencé pour être évacué dudit réservoir (10) via ledit tuyau d'évaporation (20) à une certaine pression de réservoir, dans lequel ledit raccord basé sur châssis est agencé pour fournir un raccord entre ledit réservoir (10) et ledit tuyau d'évaporation (20), et dans lequel le gaz évaporé provenant dudit réservoir est évacué à travers ledit élément de couplage (34) comprenant une ouverture de tuyau (02) pour fournir un raccord pour une évacuation externe dudit gaz évaporé dans ladite position inclinée.

2. Véhicule (1) selon la revendication 1, dans lequel ledit élément de couplage (34) comprend un membre de guidage de forme conique (34a) agencé autour de ladite ouverture de tuyau (02).

3. Véhicule (1) selon la revendication 2, dans lequel ledit soufflet (34) comprend un siège de guidage concave de forme conique (32a) destiné à faciliter le raccord dudit soufflet (32) audit élément de couplage (34).

4. Véhicule (1) selon la revendication 1 ou 2, comprenant en outre un élément de couverture (34c) agencé de manière amovible en raccordement avec ladite ouverture pour couvrir ladite ouverture de tuyau (02).

5. Véhicule (1) selon l'une quelconque des revendications 1 à 4, dans lequel ledit soufflet (32) est agencé pour s'adapter aux mouvements mutuels entre ledit châssis (3) et ladite cabine (2) dans ladite position non inclinée de la cabine (2).

6. Véhicule (1) selon l'une quelconque des revendications 1 à 5, dans lequel ledit dispositif de couplage (30) est agencé pour raccorder de manière fonctionnelle le réservoir de carburant gazeux (10) au tuyau d'évaporation monté sur la cabine (20) lorsque la cabine (2) est dans une position non inclinée.
